# EUROPÄISCHE PATENTSCHRIFT

(11) **EP 1 816 030 B1**
(45) Veröffentlichungstag und Bekanntmachung des Hinweises auf die Patenterteilung: **25.06.2008**
(21) Anmeldenummer: 07002227.2
(22) Anmeldetag: 01.02.2007
(51) Int. Cl.: B60P 3/20

(54) **Mobile Kühlzelle**
Mobile cooling cell
Cellule froide mobile

(30) Priorität: 03.02.2006 DE 202006001736 U
(43) Veröffentlichungstag der Anmeldung: 08.08.2007
(73) Patentinhaber: Lamberet Deutschland GmbH, 89079 Ulm-Donautal (DE)
(72) Erfinder: Irtenkauf, Hugo, 7372 Donzdorf (DE)
(74) Vertreter: Schlimme, Wolfram

(56) Entgegenhaltungen:
- EP-A- 0 235 119
- EP-A1- 0 466 531
- WO-A-93/14359
- DE-U1- 9 013 442
- FR-A- 2 816 888
- GB-A- 1 132 151
- US-A- 3 487 769
- US-A- 5 729 983

## Beschreibung

Die Erfindung betrifft eine mobile Kühlzelle gemäß dem Oberbegriff des Schutzanspruchs 1. Sie betrifft weiterhin ein Kühlfahrzeug mit einer derartigen Kühlzelle als Fahrzeugaufbau.

Gattungsgemäße mobile Kühlzellen sind bereits aus dem Stand der Technik bekannt, wobei eine Vorrichtung zur Erzeugung einer kontrollierten Atmosphäre im Innenraum der Kühlzelle dazu dient, den Sauerstoffanteil im Innenraum herabzusetzen, um die Respirationsrate von im Innenraum gelagerten Früchten, zusätzlich zu der durch die Kühlung erreichten Senkung der Respirationsrate, weiter herabzusetzen und so den Reifeprozeß der Früchte während des Transports zu hemmen. Eine derartige Kombination aus Kühlung und Erzeugung einer kontrollierten Atomsphäre sorgt daher dafür, daß reif geerntete Früchte auch während eines längeren Transports nicht verderben.

Bislang wurden herkömmliche Kühlzellen mit einer Vorrichtung zur Erzeugung einer kontrollierten Atmosphäre ausgestattet, wobei derartige Vorrichtungen beispielsweise von der Firma Cargofresh AG in Ahrensburg bei Hamburg hergestellt und vertrieben werden.
Herkömmliche Kühlzellen sind üblicherweise nur thermisch abgedichtet, wobei eine hermetische Abdichtung vermieden wird, die bei einem Herunterkühlen oder Erwärmen des Innenraums aufgrund des bei einer hermetischen Abdichtung nicht mehr möglichen Druckausgleichs unerwünschte hohe Belastungen der mechanischen Struktur der Kühlzelle bewirken würde. Ein gewisser Luftaustausch zwischen Innenraum der Kühlzelle und der Umgebung ist daher bei herkömmlichen Kühlzellen erwünscht.

Bei herkömmlichen gattungsgemäßen mobilen Kühlzellen, bei denen eine handelsübliche Vorrichtung zur Erzeugung einer kontrollierten Atmosphäre in eine handelsübliche Kühlzelle eingebaut wird, kann es daher bis zu mehreren Tagen dauern, bis eine gewünschte Absenkung des Sauerstoffgehalts in der Atmosphäre im Innenraum der Kühlzelle erzielt worden ist.

Aufgabe der vorliegenden Erfindung ist es, eine gattungsgemäße mobile Kühlzelle so auszugestalten, daß der Vorgang der Erzeugung einer gewünschten Atmosphäre im Innenraum der Kühlzelle beschleunigt werden kann und die gewünschte Atmosphäre im Innenraum der Kühlzelle schneller erreicht wird. '

Diese Aufgabe wird durch die Merkmale des Schutzanspruchs 1 gelöst.

Das nach außen hin abgedichtete Gehäuse der Kühlzelle sowie das Vorsehen von zumindest einer aufblasbaren Dichtung zur Abdichtung der zumindest einen Zugangsöffnung und die dadurch ermöglichte hermetische Abdichtung des Innenraums bei geschlossener Zugangsöffnung bewirken, daß sich im Innenraum eine gewünschte, von Luft verschiedene Atmosphäre erzeugen läßt, wobei diese nicht mit von außen ungewollt einströmender Luft vermischt wird. Die Einstellung einer gewünschten von Luft verschiedenen Atmosphäre kann somit schneller erfolgen, als dies im Stand der Technik der Fall ist.

Vorzugsweise ist die mobile Kühlzelle ein Kühlcontainer oder ein Fahrzeugaufbau, insbesondere ein Aufbau für ein Straßenfahrzeug. Ein gattungsgemäßes Fahrzeug ist in der US 3 487 769 offenbart.

In einer bevorzugten Ausführungsform ist die zumindest eine aufblasbare Dichtung Teil einer mehrstufigen Dichtungsanordnung mit weiteren Dichtungselementen. Eine derartige Dichtungsanordnung verbessert nicht nur den Abdichtungseffekt, sondern sorgt auch dann für eine Abdichtung, wenn die aufblasbare Dichtung nicht unter Druck gesetzt ist, sodaß das Kühlfahrzeug auch ohne kontrollierte Atmosphäre und mit sich ändernder Innenraumtemperatur betrieben werden kann.

Weisen die weiteren Dichtungselemente zumindest zwei hintereinander angeordnete und voneinander beabstandete Dichtungslappen auf, die im geschlossen Zustand der Zugangsöffnung zwischen sich einen Hohlraum bestimmen, so wird zusätzlich zu der von der aufblasbaren Dichtungsanordnung geschaffenen gasdichten Abdichtung auch im Bereich der Dichtung einer verbesserte thermische Isolierung durch die in dem zumindest einen Hohlraum zwischen den zumindest zwei Dichtungslippen enthaltene Luft erzielt.

Vorzugsweise ist am Gehäuse oder an der zumindest einen Tür oder Klappe eine Verriegelungsvorrichtung für die Tür oder Klappe vorgesehen, die im geschlossenen Zustand der Zugangsöffnung nur dann entriegelbar ist, wenn die aufblasbare Dichtung nicht aufgeblasen ist. Diese Verriegelungsvorrichtung sorgt dafür, daß die Tür oder Klappe nicht geöffnet werden kann, solange der Innenraum gegenüber der Umgebung hermetisch abgedichtet ist, sodaß ein Eindringen von Außenluft in das Innere der Kühlzelle durch versehentliches Öffnen der Tür oder Klappe vermieden ist.

Alternativ kann die Verrieglungsvorrichtung auch so ausgestaltet sein, daß sie nur dann entriegelbar ist, wenn die im Innenraum vorhandene Atmosphäre eine für den Menschen unschädliche Zusammensetzung aufweist. Diese Ausgestaltung erhöht die Betriebssicherheit und dient der Unfallverhütung, indem verhindert wird, daß durch unachtsames Öffnen der Tür oder Klappe der mit einer von Luft verschiedenen Atmosphäre gefüllte Innenraum für Menschen oder Tiere zugänglich wird, die darin möglicherweise zu Schaden kommen oder gar ersticken könnten.

Vorzugsweise läßt sich die Verriegelungsvorrichtung erst dann entriegeln, wenn die im Innenraum vorhandene Atmosphäre wenigstens 10 % Sauerstoff enthält. Wird die Tür oder die Klappe bei einer Atmosphäre mit diesem Sauerstoffanteil geöffnet und betritt ein Mensch oder ein Tier den Innenraum, so ist keine unmittelbare Lebensgefahr mehr gegeben, zumal durch die dann offene Zugangsöffnung ein Luftaustausch und damit auch eine Erhöhung des Sauerstoffanteils in der Atmosphäre im Innenraum der Kühlzelle erfolgt.

Eine bevorzugte Ausführungsform zeichnet sich dadurch aus, daß die Kühlzelle mit einer Sensorvorrichtung versehen ist, die die Gaszusammensetzung der im Innenraum vorhandenen Atmosphäre bestimmt und die ein für die Gaszusammensetzung im Innenraum repräsentatives Signal an eine Steuereinrichtung für die dann beispielsweise elektromechanisch oder hydraulisch betätigbare Verriegelungsvorrichtung leitet, so daß bei Erreichen eines vorgegebenen, für die Gaszusammensetzung repräsentativen Werts von der Steuereinrichtung ein Freigabesignal an die Verriegelungsvorrichtung weitergeleitet wird, um ein Öffnen der Verriegelungsvorrichtung zu gestatten.

Weitere vorteilhafte Ausgestaltungen der Erfindung sind in den verbleibenden Ansprüchen angegeben, wobei eine besonders vorteilhafte Anwendung der erfindungsgemäßen mobilen Kühlzelle in einem Kühlfahrzeug mit einem als derartige Kühlzelle ausgebildeten Aufbau gekennzeichnet ist.

Die Erfindung wird nachfolgend anhand eines Beispiels unter Bezugnahme auf die Zeichnung näher erläutert; in dieser zeigt:
- **Fig. 1**: eine mit einer zweiflügeligen Hecktür versehene erfindungsgemäße Kühlzelle, wie sie beispielsweise als LKW-Aufbau Verwendung findet,
- **Fig. 2**: einen Querschnitt durch eine Dichtungsanordnung mit einer aufblasbaren Dichtung, wie sie bei der erfindungsgemäßen mobilen Kühlzelle Verwendung findet, und
- **Fig. 3**: eine vergrößerte Darstellung des mittleren Bereichs der Tür.

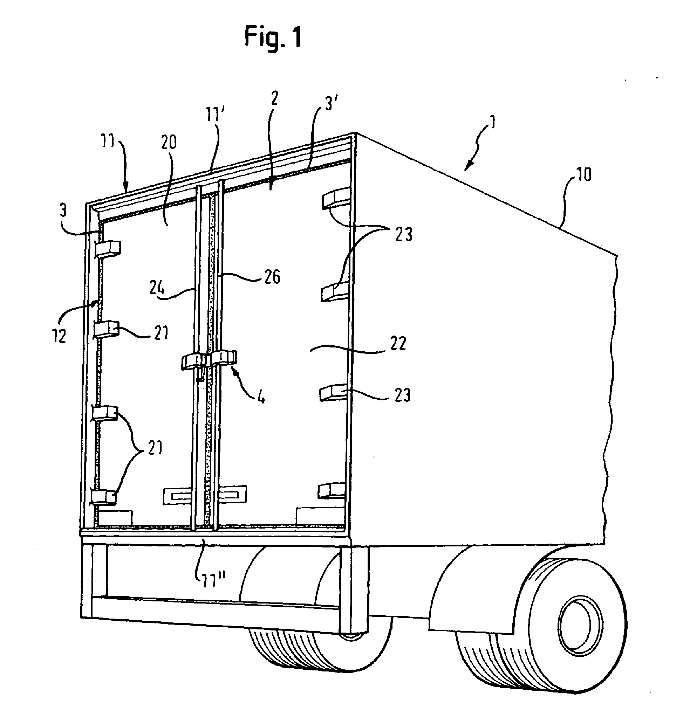

Fig. 1 zeigt die Heckansicht einer teilweise geschnittenen Kühlzelle 1, die auf einem LKW-Fahrgestell montiert ist, in perspektivischer Darstellung. Die am Fahrzeugheck gelegene Rückseite des quaderförmigen Gehäuses 10 der Kühlzelle 1 bildet eine von einem Gehäuserahmen 11 umgebene Zugangsöffnung 12. Die Zugangsöffnung 12 ist in der in Fig. 1 gezeigten Darstellung von einer Tür 2 verschlossen, die einen linken Türflügel 20 und einen rechten Türflügel 22 aufweist.
Die Türflügel 20, 22 sind jeweils mit an der Fahrzeugaußenseite liegenden Scharnieren 21, 23 mit dem Gehäuserahmen 11 um jeweils eine Hochachse schwenkbar verbunden.

Jeder Türflügel 20, 22 ist über seinen gesamten Umfang mit einer Dichtungsanordnung 3, 3' versehen, die im geschlossenen Zustand des jeweiligen Türflügels 20, 22 gegenüber dem Gehäuserahmen 11 und damit gegenüber dem Gehäuse 10 sowie an den einander gegenübergelegenen freien Türkanten gegen den jeweils anderen Türflügel 22, 20 abdichtet.

Auch das Gehäuse 10 ist an den jeweiligen Nahtstellen der einzelnen Gehäusewände sowie des Gehäusebodens und des oberen Gehäusedeckels mittels eines elastischen Dichtmittels abgedichtet, so daß der Innenraum 14 der Kühlzelle 1 im geschlossenen Zustand der Zugangsöffnung gegenüber der Umgebung hermetisch, also luftdicht, abgedichtet ist.

Neben einer - nicht gezeigten - Kühleinrichtung zur Kühlung des Innenraums 14 der Kühlzelle 1 ist eine - nicht gezeigte - Vorrichtung zur Erzeugung einer kontrollierten Atmosphäre im Innenraum 14 vorgesehen. Der Innenraum kann auf diese Weise sowohl gekühlt werden, als auch mit einer Atmosphäre befüllt werden, die von Luft verschieden ist, beispielsweise mit einer Atmosphäre, die - abgesehen von Edelgasspuren - nur noch 3 % Sauerstoff und 97 % Stickstoff enthält.

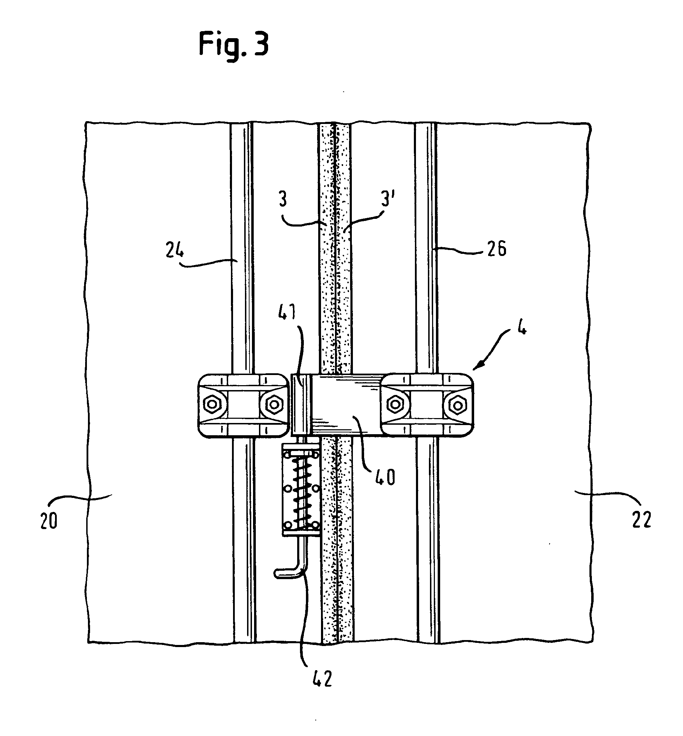

Die Türflügel 20, 22 sind im Bereich ihrer einander zugewandten Türkanten mit handelsüblichen außenliegenden Drehstangenverschlüssen 24, 26 versehen, die im geschlossenen Zustand eine Verriegelung im oberen und unteren Querbalken 11', 11" des Gehäuserahmens 11 bewirken. In der Mitte, zwischen dem jeweiligen oberen und unteren Verriegelungsende des jeweiligen Drehstangenverschlusses 24, 26 ist eine weitere Verriegelungsvorrichtung 4 vorgesehen, die weiter unten in Verbindung mit Fig. 3 noch beschrieben wird.

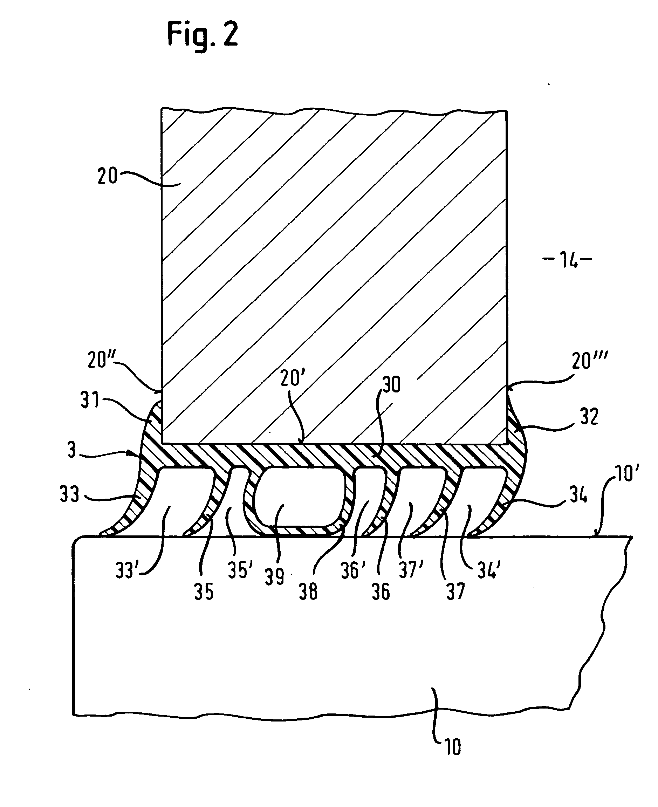

Fig. 2 zeigt einen Querschnitt durch eine Dichtungsanordnung 3, die zur Abdichtung des linken Türflügels 20 der Tür 2 der Kühlzelle 1 Verwendung findet. Die Dichtung 3' zur Abdichtung des rechten Türflügels 22 ist in gleicher Weise ausgestaltet.

In Fig. 2 ist der untere Randbereich des linken Türflügels 20 in der geschlossenen Stellung in einem Vertikalschnitt dargestellt, wobei die untere Kante des Türflügels 20 dem Gehäuseboden 10' des Gehäuses 10 der Kühlzelle 1 benachbart gelegen ist.

Die Dichtungsanordnung 3 umgreift den Rand des Türflügels 20 und liegt mit einem Dichtungshauptkörper 30 an der umlaufenden Kante 20' des Türflügels 20 an. Vordere und hintere türseitige Dichtlippen 31, 32 sind mit dem Dichtungshauptkörper 30 verbunden und umgreifen die umlaufende Türkante 20' an der äußeren Seite 20" und an der inneren Seite 20 ''' der Tür. Die jeweilige türseitige Dichtlippe 31, 32 setzt sich nach unten in eine hintere äußere Dichtlippe 33 und in eine vordere äußere Dichtlippe 34 fort, die jeweils an ihrem freien Ende in abdichtender Berührung mit dem Gehäuseboden 10' stehen. Zwischen der hinteren äußere Dichtlippe 33 und der vorderen äußere Dichtlippe 34 sind mit Abstand zueinander weitere äußere Dichtlippen 35, 36, 37 vorgesehen, die sich ebenfalls vom Dichtungshauptkörper 30 nach außen, also vom Türflügel abgewandt, erstrecken und mit ihrem freien Ende abdichtend auf dem Gehäuseboden 10' aufliegen.

Zwischen der ersten weiteren äußeren Dichtlippe 35 und der zweiten weiteren äußeren Dichtlippe 36 ist eine im Querschnitt ringförmige aufblasbare Dichtung 38 vorgesehen, die ebenfalls mit dem Dichtungshauptkörper 30 verbunden ist. Die aufblasbare Dichtung 38 bildet einen in sich geschlossenen, über den Umfang des Türflügels 20 verlaufenden aufblasbaren und unter Druck setzbaren Schlauch. Wird die aufblasbare Dichtung 38 über einen - nicht gezeigten - Druckluftanschluß mittels eines Kompressors, beispielsweise des in einem LKW vorhandenen Druckluftkompressors, mit Druckluft befüllt, so daß der Druck im Schlauchinnenraum 39 größer ist als der Umgebungsdruck, so wird die aufblasbare Dichtung 38 aufgrund der Elastizität des verwendeten Dichtungsmaterials gegen die ihr gegenübergelegene Dichtfläche am Gehäuserahmen 11 gedrückt, wobei diese Dichtfläche in Fig. 2 von dem Gehäuseboden 10' gebildet wird. An der jeweiligen freien Kante der Türflügel 20 und 22 liegen die einander gegenübergelegenen Dichtungen 3, 3' aneinander an, so daß sich dort die jeweiligen aufblasbaren Dichtungen 38 berühren und gegeneinander drücken.

Einander benachbarte voneinander beabstandete Dichtlippen 33, 34, 35, 36, 37 und die schlauchförmige aufblasbare Dichtung 38 und deren benachbarte Dichtlippen 35, 36 bestimmen in geschlossenem Zustand der Zugangsöffnung 12 zwischeneinander jeweils einen luftgefüllten Hohlraum 33', 34', 35', 36', 37'.

Der von der jeweiligen aufblasbaren Dichtung 38 zwischen dem jeweiligen Türflügel 20, 22 und dem Gehäuse 10 der Kühlzelle 1 aufgebrachte Druck führt dazu, daß eine in Türöffnungsrichtung gerichtete Kraft auf die Türen einwirkt , was im Bereich der Türmitte der zweiflügligen Tür dazu führt, daß die Tür bestrebt ist, sich nach außen zu wölben. Um eine derartige Wölbung und ein damit verbundenes Undichtwerden der Tür zu verhindern, ist im Bereich der Türmitte die in Fig. 3 dargestellte zusätzliche Verriegelungsvorrichtung vorgesehen.

Ein Türflügel 22 ist mit einer an der Türaußenseite gelegenen und über den Umfangsrand des Türflügels 22 hinausstehenden Lasche 40 verbunden, die im geschlossenen Zustand der Tür 2 an der Außenseite des anderen Türflügels 20 zur Anlage kommt. In diesem Bereich ist am anderen Türflügel 20 ein federbeaufschlagter, verschiebbarer Riegel 42 vorgesehen, der sich in seinem geschlossenen Zustand vor die Lasche 40 oder in eine an der Lasche ausgebildete Hülse 41 schiebt, so daß die Lasche 40 zwischen dem Riegel 42 und der Außenseite des anderen Türflügels 20 arretiert ist, wobei die Arretierung des Riegels in der Hülse 41 auch in seitlicher Richtung der Tür gerichtete Kräfte zwischen den Türflügeln 20, 22 abstützt. Diese seitlich gerichtete Kraft und die auf die Türflügel 20, 22 einwirkende nach außen, also im gezeigten Beispiel nach hinten, gerichtete Kraft drückt dabei die an der Lasche 40 ausgebildete Hülse 41 gegen den Riegel 42 und erzeugt so im Berührungsbereich von Lasche 40 beziehungsweise Hülse 41 und Riegel 42 eine Anpreßkraft, die aufgrund der sich ergebenden hohen Reibung zwischen Lasche beziehungsweise Hülse und Riegel eine Relativverschiebung zwischen Riegel und Lasche beziehungsweise Hülse und somit eine Öffnen des Riegels verhindert, wenn die aufblasbare Dichtung 38 unter Druck steht.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Mobile Kühlzelle mit
- einem thermisch isolierenden Gehäuse (10), das einen temperierbaren Innenraum (14) umgrenzt und zumindest eine abdichtend verschließbare Zugangsöffnung (12) zum Innenraum (14) aufweist,
- einer Kühleinrichtung zur Kühlung des Innenraums (14) sowie
- einer Vorrichtung zur Erzeugung einer kontrollierten Atmosphäre im Innenraum (14),
- wobei das Gehäuse (10) gegenüber der Umgebung abgedichtet ausgebildet ist, und
- wobei zur Abdichtung der zumindest einen Zugangsöffnung (12) eine Dichtungsanordnung mit einer aufblasbaren Dichtung (38) vorgesehen ist,
**dadurch gekennzeichnet ,**
**daß** die Dichtungsanordnung (3) mehrstufig ausgebildet ist und zusätzlich zu der zumindest einen aufblasbaren Dichtung (38) weitere Dichtungselemente aufweist.

2. Mobile Kühlzelle nach Anspruch 1,
**dadurch gekennzeichnet ,**
**daß** die weiteren Dichtungselemente zumindest zwei hintereinander angeordnete und voneinander beabstandete Dichtlippen (33, 34, 35, 36, 37) aufweisen, die in geschlossenem Zustand der Zugangsöffnung (12) zwischen sich jeweils einen Hohlraum (33', 34', 35', 36', 37') bestimmen.

3. Mobile Kühlzelle nach Anspruch 1 oder 2,
**dadurch gekennzeichnet ,**
**daß** die mobile Kühlzelle (1) ein Kühlcontainer ist.

4. Mobile Kühlzelle nach Anspruch 1 oder 2,
**dadurch gekennzeichnet ,**
**daß** die mobile Kühlzelle (1) ein Fahrzeugaufbau ist.

5. Mobile Kühlzelle nach einem der vorhergehenden Ansprüche,
**dadurch gekennzeichnet ,**
- **daß** die Zugangsöffnung (12) mittels zumindest einer vorzugsweise am Gehäuse (10) schwenkbar angelenkten Tür (2) oder Klappe verschließbar ist und
- **daß** die zumindest eine aufblasbare Dichtung (38) zwischen dem Gehäuse (10) und der zumindest einen Tür (2) oder Klappe vorgesehen ist.

6. Mobile Kühlzelle nach Anspruch 5,
**dadurch gekennzeichnet ,**
**daß** die zumindest eine aufblasbare Dichtung (38) an der zumindest einen Tür (2) oder Klappe angeordnet ist.

7. Mobile Kühlzelle nach Anspruch 5 oder 6,
**dadurch gekennzeichnet ,**
**daß** die zumindest eine aufblasbare Dichtung (38) am Gehäuse (10), vorzugsweise im Umfangsbereich der Zugangsöffnung (12), angeordnet ist.

8. Mobile Kühlzelle nach einem der vorhergehenden Ansprüche,
**dadurch gekennzeichnet ,**
**daß** die zumindest eine Tür (2) oder Klappe mehrere Flügel (20, 22) aufweist und daß die aufblasbare Dichtung (38) auch zwischen den Flügeln (20, 22) vorgesehen ist.

9. Mobile Kühlzelle nach einem der vorhergehenden Ansprüche,
**dadurch gekennzeichnet ,**
**daß** am Gehäuse (10) oder an der zumindest einen Tür (2) oder Klappe eine Verriegelungsvorrichtung (4) für die Tür (2) oder Klappe vorgesehen ist, die im geschlossenen Zustand der Zugangsöffnung (12) nur dann entriegelbar ist, wenn die aufblasbare Dichtung (38) nicht aufgeblasen ist.

10. Mobile Kühlzelle nach einem der vorhergehenden Ansprüche,
**dadurch gekennzeichnet ,**
**daß** am Gehäuse (10) oder an der zumindest einen Tür (2) oder Klappe eine Verriegelungsvorrichtung für die Tür (2) oder Klappe vorgesehen ist, die im geschlossenen Zustand der Zugangsöffnung (12) nur dann entriegelbar ist, wenn die im Innenraum (14) vorhandene Atmosphäre eine für den Menschen unschädliche Zusammensetzung aufweist.

11. Mobile Kühlzelle nach einem der vorhergehenden Ansprüche,
**dadurch gekennzeichnet ,**
**daß** am Gehäuse (10) oder an der zumindest einen Tür (2) oder Klappe eine Verriegelungsvorrichtung für die Tür (2) oder Klappe vorgesehen ist, die im geschlossenen Zustand der Zugangsöffnung (12) nur dann entriegelbar ist, wenn die im Innenraum (14) vorhandene Atmosphäre wenigstens 10% Sauerstoff enthält.

12. Mobile Kühlzelle nach Anspruch 10 oder 11,
**dadurch gekennzeichnet ,**
**daß** die Kühlzelle (1) mit einer Sensorvorrichtung versehen ist, die die Gaszusammensetzung der im Innenraum (14) vorhandenen Atmosphäre bestimmt und die ein für die Gaszusammensetzung im Innenraum (14) repräsentatives Signal an eine Steuereinrichtung für die Verriegelungsvorrichtung leitet, so daß bei Erreichen eines vorgegebenen, für die Gaszusammensetzung repräsentativen Werts von der Steuereinrichtung ein Freigabesignal an die Verriegelungsvorrichtung weitergeleitet wird, um ein Öffnen der Verriegelungsvorrichtung zu gestatten.

13. Mobile Kühlzelle nach Anspruch 12,
**dadurch gekennzeichnet ,**
**daß** die Sensorvorrichtung zumindest einen Sauerstoffsensor aufweist.

14. Kühlfahrzeug mit einem Fahrzeugaufbau, der eine Kühlzelle (1) gemäß einem der vorhergehenden Ansprüche umfaßt.

## Claims

1. Mobile cold storage cell comprising
- a thermally insulating housing (10), which surrounds a temperature-controllable interior (14) and has at least one sealingly closable access opening (12) to the interior (14),
- a cooling device for cooling the interior (14) and
- an apparatus for generating a controlled atmosphere in the interior (14),
- wherein the housing (10) is configured so as to be sealed off from the environment, and
- wherein for sealing the at least one access opening (12) there is provided a sealing arrangement comprising an inflatable seal (38)
**characterized in**
**that** the sealing arrangement (3) is of a multi-stage configuration and in addition to the at least one inflatable seal (38) comprises further sealing elements.

2. Mobile cold storage cell according to claim 1,
**characterized in**
**that** the further sealing elements comprise at least two successively disposed and mutually spaced sealing lips (33, 34, 35, 36, 37), between which in the closed state of the access opening (12) in each case a hollow space (33', 34', 35', 36', 37') is defined.

3. Mobile cold storage cell according to claim 1 or 2,
**characterized in**
**that** the mobile cold storage cell (1) is a refrigerated container.

4. Mobile cold storage cell according to claim 1 or 2,
**characterized in**
**that** the mobile cold storage cell (1) is a vehicle body.

5. Mobile cold storage cell according to one of the preceding claims,
**characterized in**
- **that** the access opening (12) is closable by means of at least one door (2) or flap member, which is preferably coupled pivotably to the housing (10), and
- **that** the at least one inflatable seal (38) is provided between the housing (10) and the at least one door (2) or flap member.

6. Mobile cold storage cell according to claim 5,
**characterized in**
**that** the at least one inflatable seal (38) is disposed on the at least one door (2) or flap member.

7. Mobile cold storage cell according to claim 5 or 6,
**characterized in**
**that** the at least one inflatable seal (38) is disposed on the housing (10), preferably in the peripheral region of the access opening (12).

8. Mobile cold storage cell according to one of the preceding claims,
**characterized in**
**that** the at least one door (2) or flap member has a plurality of leaves (20, 22) and that the inflatable seal (38) is provided also between the leaves (20, 22).

9. Mobile cold storage cell according to one of the preceding claims,
**characterized in**
**that** on the housing (10) or on the at least one door (2) or flap member a locking apparatus (4) for the door (2) or flap member is provided, which in the closed state of the access opening (12) is unlockable only when the inflatable seal (38) is not inflated.

10. Mobile cold storage cell according to one of the preceding claims,
**characterized in**
**that** on the housing (10) or on the at least one door (2) or flap member a locking apparatus for the door (2) or flap member is provided, which in the closed state of the access opening (12) is unlockable only when the atmosphere in the interior (14) is of a composition that is harmless to humans.

11. Mobile cold storage cell according to one of the preceding claims,
**characterized in**
**that** on the housing (10) or on the at least one door (2) or flap member a locking apparatus for the door (2) or flap member is provided, which in the closed state of the access opening (12) is unlockable only when the atmosphere in the interior (14) contains at least 10% oxygen.

12. Mobile cold storage cell according to claim 10 or 11,
**characterized in**
**that** the cold storage cell (1) is provided with a sensor apparatus, which determines the gas composition of the atmosphere in the interior (14) and which passes a signal representative of the gas composition in the interior (14) to a control device for the locking apparatus, so that upon attainment of a preset value representative of the gas composition the control device transmits a release signal to the locking apparatus in order to permit an opening of the locking apparatus.

13. Mobile cold storage cell according to claim 12,
**characterized in**
**that** the sensor apparatus comprises at least one oxygen sensor.

14. Refrigerated vehicle having a vehicle body that comprises a cold storage cell (1) according to one of the preceding claims.

## Revendications

1. Cellule froide mobile, comprenant :
- un boîtier thermiquement isolant (10), qui entoure une chambre intérieure (14) susceptible d'être tempérée et qui comporte au moins une ouverture d'accès (12), susceptible d'être obturée de façon étanche, vers la chambre intérieure (14),
- un système de refroidissement pour refroidir la chambre intérieure (14), et
- un dispositif pour engendrer une atmosphère contrôlée dans la chambre intérieure (14),
- dans laquelle le boîtier (10) est réalisé de façon étanche par rapport à l'environnement, et
- pour l'étanchement de ladite au moins une ouverture d'accès (12), il est prévu un agencement d'étanchéité avec un joint gonflable (38),
**caractérisée en ce que**
l'agencement d'étanchéité (3) est réalisé à plusieurs étages et comporte, additionnellement audit au moins un joint gonflable (38), d'autres éléments d'étanchéité.

2. Cellule froide mobile selon la revendication 1,
**caractérisée en ce que** les autres éléments d'étanchéité comprennent au moins deux lèvres d'étanchéité (33, 34, 35, 36, 37) agencées les unes derrière les autres et à distance les unes des autres, qui définissent entre elles respectivement une cavité (33', 34', 35', 36', 37') dans l'état fermé de l'ouverture d'accès (12).

3. Cellule froide mobile selon la revendication 1 ou 2,
**caractérisée en ce que** la cellule froide mobile (1) est un container frigorifique.

4. Cellule froide mobile selon la revendication 1 ou 2,
**caractérisée en ce que** la cellule froide mobile (1) est une superstructure de véhicule.

5. Cellule froide mobile selon l'une des revendications précédentes,
**caractérisée en ce que** :
- l'ouverture d'accès (12) est susceptible d'être obturée au moyen d'au moins une porte (2) ou un volet articulé(e) en pivotement de préférence sur le boîtier (10), et
- ledit au moins un joint gonflable (38) est prévu entre le boîtier (10) et ledit/ladite au moins un(e) porte (2) ou volet.

6. Cellule froide mobile selon la revendication 5,
**caractérisée en ce que** ledit au moins un joint gonflable (38) est agencé sur ledit/ladite au moins un(e) porte (2) ou volet.

7. Cellule froide mobile selon la revendication 5 ou 6,
**caractérisée en ce que** ledit au moins un joint gonflable (38) est agencé sur le boîtier (10), de préférence dans la zone périphérique de l'ouverture d'accès (12).

8. Cellule froide mobile selon l'une des revendications précédentes,
**caractérisée en ce que** ledit/ladite au moins un(e) porte (2) ou volet comprend plusieurs vantaux (20, 22), et **en ce que** le joint gonflable (38) est prévu également entre les vantaux (20, 22).

9. Cellule froide mobile selon l'une des revendications précédentes,
**caractérisée en ce qu'**il est prévu sur le boîtier (10) ou sur ledit/ladite au moins un(e) porte (2) ou volet un dispositif de verrouillage (4) pour la porte (2) ou le volet qui, dans l'état fermé de l'ouverture d'accès (12), ne peut être déverrouillé que lorsque le joint gonflable (38) n'est pas gonflé.

10. Cellule froide mobile selon l'une des revendications précédentes,
**caractérisée en ce qu'**il est prévu sur le boîtier (10) ou sur ledit/ladite au moins un(e) porte (2) ou volet un dispositif de verrouillage pour la porte (2) ou le volet qui, dans l'état fermé de l'ouverture d'accès (12), ne peut être déverrouillé que si l'atmosphère présente dans la chambre intérieure (14) présente une composition non nocive pour les êtres humains.

11. Cellule froide mobile selon l'une des revendications précédentes,
**caractérisée en ce qu'**il est prévu sur le boîtier (10) ou sur ledit/ladite au moins un(e) porte (2) ou volet un dispositif de verrouillage pour la porte (2) ou le volet qui, dans l'état fermé de l'ouverture d'accès (12), ne peut être déverrouillé que si l'atmosphère présente dans la chambre intérieure (14) contient au moins 10 % d'oxygène.

12. Cellule froide mobile selon la revendication 10 ou 11,
**caractérisée en ce que** la cellule froide (1) est pourvue D'un dispositif capteur qui détermine la composition gazeuse de l'atmosphère présente dans la chambre intérieure (14) et qui amène à un dispositif de commande pour le dispositif de verrouillage un signal représentatif pour la composition gazeuse dans la chambre intérieure (14), de sorte que lorsqu'une valeur prédéterminée représentative pour la composition gazeuse est atteinte, un signal de libération est transmis du dispositif de commande au dispositif de verrouillage, pour permettre une ouverture du dispositif de verrouillage.

13. Cellule froide mobile selon la revendication 12,
**caractérisée en ce que** le dispositif capteur comprend au moins un capteur d'oxygène.

14. Véhicule réfrigérant comprenant une superstructure de véhicule qui comprend une cellule froide (1) selon l'une des revendications précédentes.
